# EUROPÄISCHE PATENTSCHRIFT

(11) **EP 0 777 243 B1**
(45) Veröffentlichungstag und Bekanntmachung des Hinweises auf die Patenterteilung: **21.05.2003**
(21) Anmeldenummer: 96117306.9
(22) Anmeldetag: 29.10.1996
(51) Int. Cl.: H01H 3/20, H01H 21/10, H01H 13/70

(54) **Elektrischer Schalter**
Electric switch
Interrupteur électrique

(30) Priorität: 28.11.1995 DE 19544279
(43) Veröffentlichungstag der Anmeldung: 04.06.1997
(73) Patentinhaber: Schulte-Elektrotechnik GmbH & Co. KG, D-58515 Lüdenscheid (DE)
(72) Erfinder: Aulmann, Manfred, 58579 Schalksmühle (DE)
(74) Vertreter: Hassler, Werner, Dr.

(56) Entgegenhaltungen:
- EP-A- 0 081 682
- DE-A- 3 714 632
- DE-C- 3 341 874
- DE-C- 4 301 213
- DE-C- 4 324 092
- FR-A- 2 473 221

## Beschreibung

Die Erfindung betrifft einen elektrischen Schalter mit einem Schalthebel zur Betätigung eines Schiebers, der mindestens eine Kontaktbrücke aufnimmt, und mit einem in Einschubstellung wirksamen Freigabeschieber.

Die EP 0 466 306 B1 beschreibt einen Schalter der eingangs genannten Art, insbesondere für Rasenmäher. Bei derartigen Geräten verlangt die Vorschrift, daß der Antriebsmotor nur durch Ausführung von zwei voneinander unabhängigen Schaltbewegungen eingeschaltet werden kann. Die gattungsgemäße Anordnung hat einen Schalthebel für die Einschaitbetätigung und einen Freigabeschieber, der den Leistungsstromkreis freigibt. Da beide Schaltelemente sowohl mechanisch als auch elektrisch voneinander unabhängig sind, kann die Schaltbetätigung unter Feststellung des Schalthebels durch den Freigabeschieber allein erfolgen. Dieses ist unzulässig.

Aufgabe der Erfindung ist die Bereitstellung eines Schalters, dessen Scahlthebel nur dann eine wirksame Schaltung ermöglicht, wenn sich der Freigabeschieber in der Einschubstellung befindet. Außerdem soll der Schalter in EIN-Stellung eine Hysterese haben, damit Ausgleichsbewegungen des Schalthebels zulässig sind. Schließlich soll eine Gleitbewegung der Kontaktbrücke auf den Festkontakten erfolgen, um die Festkontakte zu reinigen.

Diese Aufgabe wird nach der Erfindung dadurch gelöst, daß der Freigabeschieber eine in Einschubstellung wirksame Lagerstelle für den Schalthebel aufweist, daß ein Stößel linear geführt ist, von dem Schalthebel bewegt wird und mit einer Profilführung des Schiebers in Eingriff kommt und daß in der EIN-Stellung beim Einlauf in eine Raststufe der Schieber und die Kontaktbrücke auf den Kontaktbelägen eine Querbewegung ausführen.

Die Erfindung unterscheidet sich insofern vom Stand der Technik, als für eine Schalterbetätigung zunänchst der Freigabeschieber in Einschubstellung gebracht werden muß. Der Schalthebel ist dann betätigbar und schaltet über einen Stößel und Profilführungen den Schieber. Durch eine Verrastung des Schiebers in EIN-Stellung erreicht man mittels der Profilführungen eine Hysterese, so daß Ausgleichsbewegungen des Schalthebels In EIN-Stellung möglich sind. Die Verschwenkung bei der Rastung führt zu einer Querbewegung des Schiebers, so daß auch die Kontaktbrücke auf den Kontaktbelägen Querbewegungen ausführt, die eine Kontaktreinigung bewirkt.

Der um verschiedene Achsen schwenkende Schalthebel kann dadurch sicher geführt werden, daß Zapfen des Schalthebels in einer herzförmigen Profilbahn geführt sind.

Eine Freichaltung wird dadurch erreicht, daß eine den Freigabe-Schieber aufnehmende Kammer in der Schwenkebene des Schalthebels offen ist.

Eine einfache und sichere Freischaltfuktion erreicht man dadurch, daß eine den Freigabeschieber aufnehmende Kammer in der Schwenkebene des Schalthebels offen ist.

Eine Geradführung und eine Verschwenkung zur Verrastung des Schiebers ist dadurch möglich, daß zur Führung des Schiebers Bolzen, um die der Schieber verschwenkbar ist, und Nasen vorgesehen sind, die mit Führungswänden und Raststufen zusammenwirken.

Eine sichere und stabile Verrastung wird dadurch erreicht, daß die Profilführung so ausgebildet ist, daß der Stößel bei der Einschaltbewegung ein Drehmoment auf den Schieber im Sinne der Verrastung der Nasen ausübt.

Die Ausschaltung wird dadurch errreicht, daß bei der Ausschaltbewegung eine Nase des Stößels mit einer Profilierung des Schiebers in Eingritf kommt.

Ein Ausführungsbeispiel der Erfindung wird anhand der Zeichnungen erläutert, in denen darstellen:
Fig. 1 eine Explosionsdarstellung des Schalters,
Fig. 2 die Funktionsteile des Schalters in der AUS-Stellung,
Fig. 3 in der EIN-Stellung,
Fig. 4 die Hysteresefunktion in der EIN-Stellung,
Fig. 5 die Vorbereitungsstellung zum Ausschalten und
Fig. 6 die Freischaltfunktion

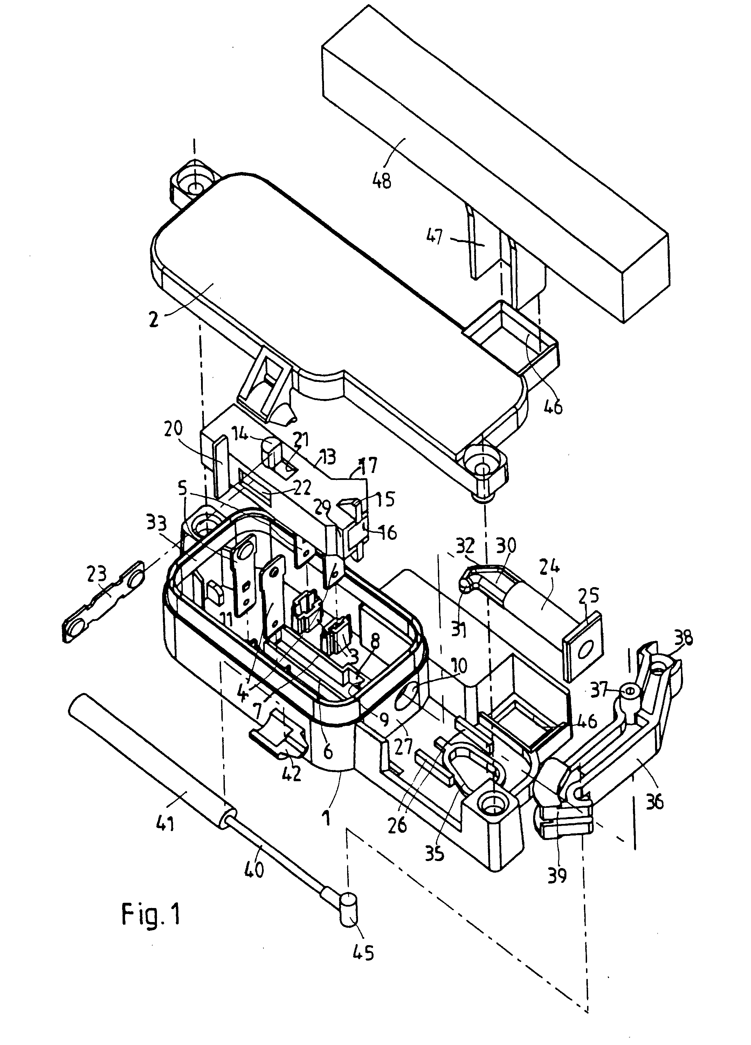

Der elektrische Schalter ist in einem Gehäuse 1 untergebracht, das durch einen Gehäusedeckel 2, der nur in Fig. 1 dargestellt ist, abgeschlossen ist. In einer Kammer des Gehäuses 1 sind Aufnahmen 3 für paarweise zusammengehörige Kontaktfedern 4, 5 mit Festkontakten vorgesehen. Im Boden des Gehäuses 1 und, nicht dargestellt, spiegelbildlich auf der Innenseite des Gehäusedeckels 2 sind Führungswände 6, 7 angeordnet. Die Führungswand 7 weist eine Ausnehmung 8 zur Ausbildung einer Raststufe 9 auf. In einer der Raststufe 9 benachbarten Zwischenwand 27 des Gehäuses 1 befindet sich ein Führungsdurchgang 10. Die gegenüberliegende Schmalseite 33 des Gehäuses 1 weist eine Aufnahme 11 für eine in Fig. 1 nicht dargestellte Schraubenfeder 12 auf.

Ein im wesentlichen rechtkantiger Schieber 13 liegt zwischen dem Gehäuse 1 und dem Gehäusedeckel 2 auf den Führungswänden 6 und 7 auf. Nach oben und unten stehen von dem Schieber 13 Bolzen 14 und Nasen 15 ab. Die Bolzen 14 liegen zwischen den Führungswänden 6 und 7 und dienen einerseits gemeinsam mit den Nasen 15 zur Geradführung des Schiebers 13 und andererseits als Schwenkachse bei der Verrastung des Schiebers 13. Zur Verrastung in der EIN-Stellung wirken die Nasen 15 mit den Raststufen 9 zusammen, was noch in Einzelheiten erläutert wird. Eine Seitenwand 34 des Schiebers 13 weist einen Ausschnitt 16 und eine geneigte Profilwand oder Prorfilführung 17 auf. Die gegenüberliegende Innenwand des Schiebers 13 weist eine innere Profilierung 29 auf.

Eine Querwand 18 des Schiebers 13 stützt eine weitere Schraubenfeder 19 ab. Die Schraubenfeder 19 stützt sich andererseits an einer Platte 20 ab, die durch Schlitze 21 im Anschluß an die Bolzen 14 hindurchreicht. In den Seitenwänden des Schiebers 13 sind weitere Schlitze 22 vorgesehen, durch die eine Kontaktbrücke 23 hindurchreicht, an der sich die Feder 12 abstützt.

Die unmitttelbare Betätigung des Schiebers 13 erfolgt durch einen Stößel 24, der in dem Durchgang 10 geführt ist. Eine Kopfplatte 25 des Stößels 24 ist außerdem zwischen Wänden 26 des Gehäuses 1 und des Gehäusedeckels 2 geführt. An der Zwischenwand 27 und der Kopfplatte 25 stützt sich eine Schraubenfeder 28 ab, die den Stößel 24 umgibt. Der Fuß 30 des Stößels 24 weist eine Nase 31 sowie eine Profilfläche 32 auf, deren Neigung im wesentlichen der Neigung der Profilwand 17 des Schiebers 13 entspricht. Die Nase 31 wirkt beim Ausschalten mit der Profilierung 29 zusammen.

In der Bodenwand des Gehäuses 1 und entsprechend spiegelbildlich in dem Gehäusedeckel 2 sind herzförmige Profilbahnen 35 eingearbeitet. Zapfen 37 eines Schalthebels 36 greifen in die Profilbahnen 35 ein und sind innerhalb derselben frei bewegbar. Der Schalthebel 35 endigt am einen Arm in einen Wälzzylinder 38 und am anderen Arm in einen Haken 39.

In den Haken 39 ist ein Zapfen 45 eines Zugelements 40 eines Bowdenzuges 41 eingehängt. Der Bowdenzug 41 stützt sich einem Ansatz 42 des Gehäuses 1 ab. Der Bowdenzug 41 ist mit einem nicht dargestellten Betätigungshebel am Holm eines Rasenmähers verbunden. Zwischen dem Ansatz 42 und eines Aufnahme 43 des Schalthebels 36 stützt sich eine Schraubenfeder 44 ab, die den Schalthebel 36 in AUS-Stellung des Schalters vorspannt.

Das Gehäuse 1 und der Gehäusedeckel 2 bilden eine weitere Kammer 46, in die ein Freigabeschieber 47 eines Schlüssels 48 einschiebbar ist. Der Freigabeschieber 47 hat ein U-Profil, das als Wälzlager für den Wälzzylinder 38 des Schalthebels 36 dient. Die Kammer 46 ist in der Schwenkebene des Schalthebels 36 offen.

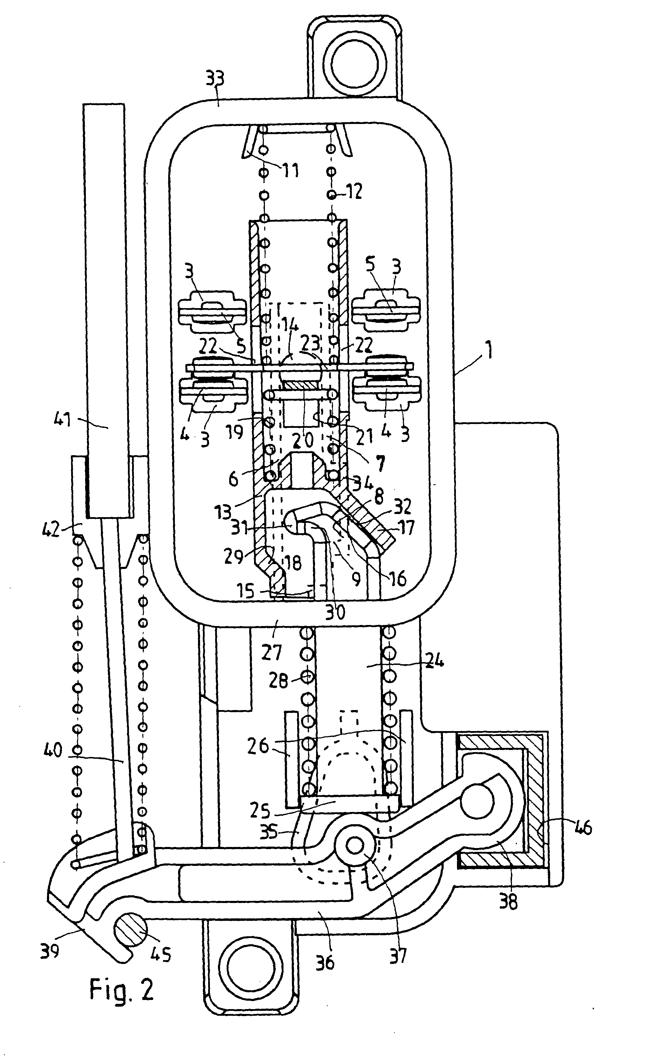

Die Funktion des Schalters wird anhand der Fig. 2 bis 6 erläutert. Fig. 2 zeigt den Schalter in AUS-Stellung. Der Freigabeschieber 47 befindet sich in Einschubstellung, so daß der Wälzzylinder 38 des Schalthebels 36 innerhalb des U-Profils des Freigabeschiebers 47 liegt. Der Schalthebel 36 ist also in dem durch den Freigabeschieber 47 gebildeten Wälzlager verschwenkbar. Die Profilbahn 35 läßt eine entsprechende Bewegung des Schalthebels 36 zu. Damit ist der Schalter für die Einschaltung vorbereitet. Die Festkontakte der Kontaktfedern 4 sind Ruhekontakte und gehören z.B. zu einem Bremsstromkreis.

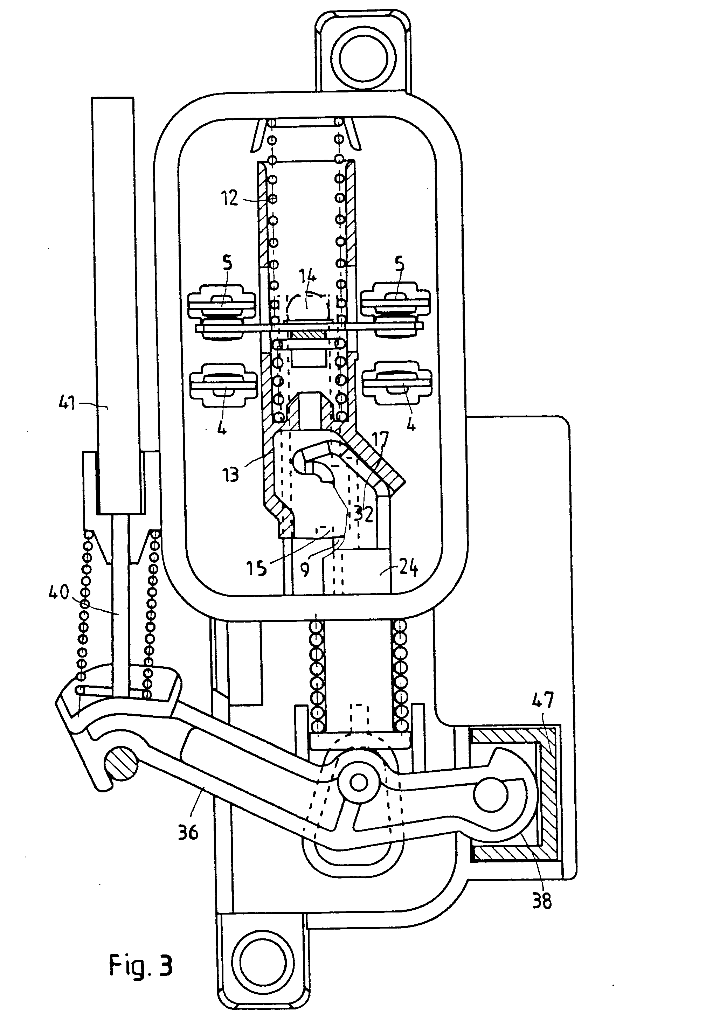

Zum Einschalten wird der nicht dargestellte Betätigungshebel des Bowdenzuges 41 betätigt, so daß über das Zugelement 40 der Schalthebel 36 in Uhrzeigerrichtung in die EIN-Stellung nach Fig. 3 verschwenkt wird. Die Profilfläche 32 des Stößels 24 kommt mit der Profilwand 17 des Schiebers 13 in Eingriff. Der Schieber 13 wird entgegen der Wirkung der Schraubenfeder 12 verschoben, bis die Nasen 15 schließlich vor den Raststufen 9 stehen. Die Kontaktbrücke 23 überbrückt die Kontaktfedern 5.

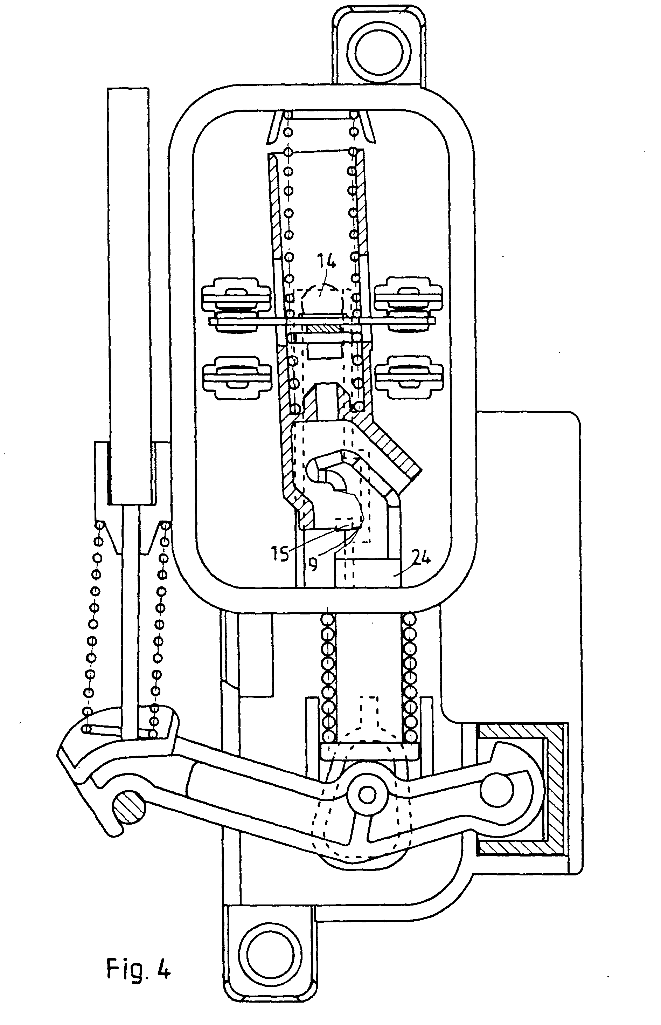

Da die Wirkungslinie des Stößels 24 die Achse der Bolzen 14 kreuzt, wird bei weiterer Einwirkung des Stößels 24 auf die Profilwand 17 ein Drehmoment in Gegenuhrzeigerrichtung um die Bolzen 14 wirksam, so daß die Nasen 15 einschwenken und auf den Raststufen 9 verrasten. Der Schieber 13 ist in der Stellung nach 4 verrastet, so daß eine sichere und gleichbleibende Kontaktgabe gewährleistet ist. In dieser EIN-Stellung weist der Schalter eine Hysterese auf, wie ebenfalls Fig. 4 zeigt. Der Stößel 24 kann sich innerhalb des Schiebers 13 frei bewegen, ohne die Verrastung auszulösen. Es sind also Ausgleichsbewegungen des Betätigungshebels zulässig.

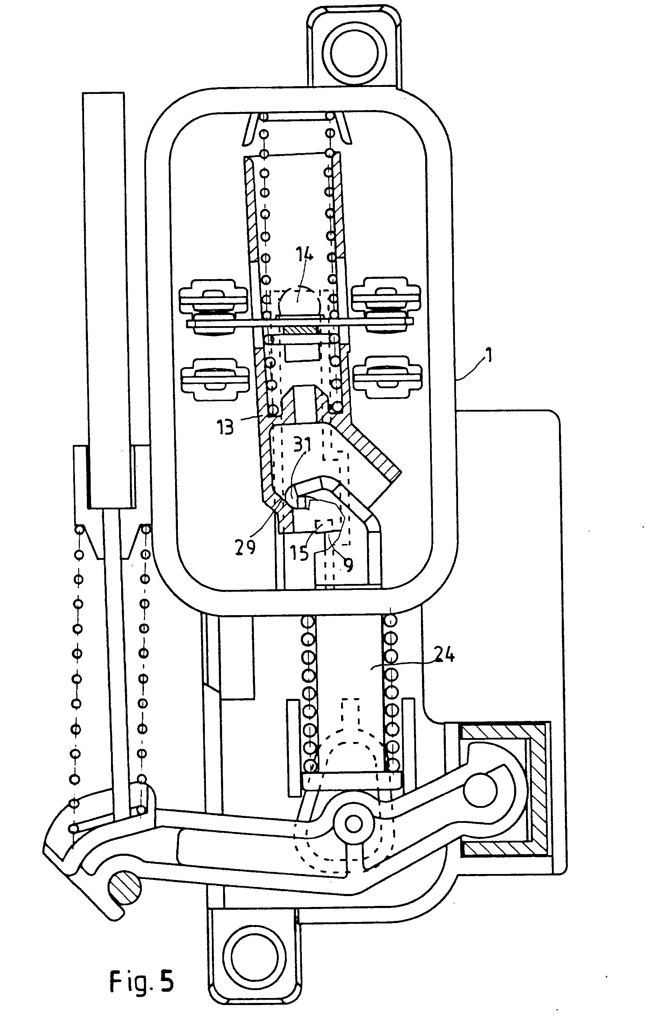

Wenn nach Fig. 5 die Nase 31 des Stößels 24 mit der Profilierung 29 des Schiebers 13 in Eingriff kommt, wird der Schieber 13 um die Bolzen 14 in Uhrzeigerrichtung verschwenkt. Dadurch kommen die Nasen 15 von den Raststufen 9 frei. Die Feder 12 wird wirksam und stellt den Schieber 13 in AUS-Stellung.

Jeweils bei der Schwenkbewegung in die Raststellung wird auch die Kontaktbrücke 23 verschoben, so daß eine Gleitbewegung der Kontaktbeläge gegeneinander erfolgt. Dieses bewirkt eine Reinigung der Kontakte. Damit wird das Kontaktverhalten wesentlich verbessert.

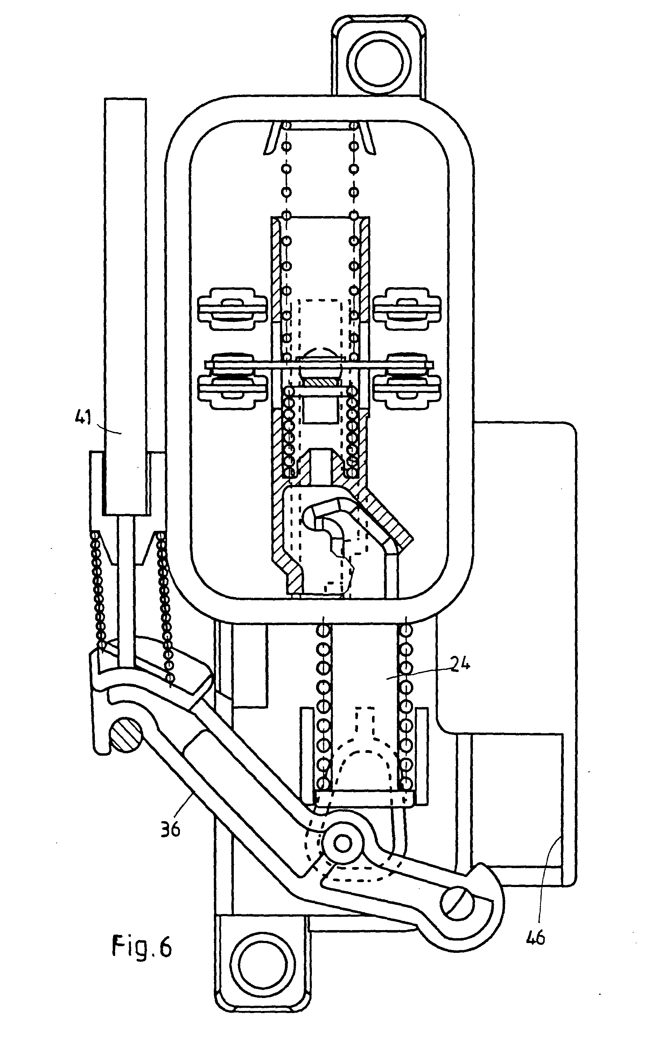

Fig. 6 zeigt die Freischaltfunktion des Schalters. Der Freigabeschieber 47 ist gezogen, so daß die Kammer 46 seitlich in der Schwenkebene des Schalthebels 36 offen ist. Bei Betätigung des Bowdenzuges 41 kann der Schalthebel 36 frei schwenken. Eine Betätigung des Stößels 24 erfolgt nicht.

## Patentansprüche

1. Elektrischer Schalter mit einem Schalthebel zur Betätigung eines Schiebers, der mindestens eine Kontaktbrücke aufnimmt, und mit einem in Einschubstellung wirksamen Freigabeschieber, **dadurch gekennzeichnet, daß** der Freigabeschieber (47) eine in Einschubstellung wirksame Lagerstelle für den Schalthebel (36) aufweist, daß ein Stößel (24) linear geführt ist, von dem Schalthebel (36) bewegt wird und mit einer Profilführung (17) des Schiebers (13) in Eingriff kommt und daß in der EIN-Stellung beim Einschwenken in eine Raststufe (9) der Schieber (13) und die Kontaktbrücke (23) auf den Festkontakten der Kontakttedern (5) eine Querbewegung ausführen.

2. Schalter nach Anspruch 1, **dadurch gekennzeichnet, daß** Zapfen (37) des Schalthebels (36) in einer herzförmigen Profilbahn (35) geführt sind.

3. Schalter nach Anspruch loder 2, **dadurch gekennzeichnet, daß** eine den Freigabeschieber (47) aufnehmende Kammer (46) in der Schwenkebene des Schalthebels (36) offen ist.

4. Schalter nach einem der Ansprüche 1 bis 3, **dadurch gekennzeichnet, daß** zur Führung des Schiebers (13) Bolzen (14), um die der Schieber (13) verschwenkbar ist, und Nasen (15) vorgesehen sind, die mit Führungswänden (6, 7) und Raststufen (9) zusammenwirken.

5. Schalter nach Anspruch 4, **dadurch gekennzeichnet, daß** die Profilführung (17) so ausgebildet ist, daß der Stößel (24) bei der Einschaltbewegung ein Drehmoment auf den Schieber (13) im Sinne der Verrastung der Nasen (15) ausübt.

6. Schalter nach Anspruch 4 oder 5, **dadurch gekennzeichnet, daß** bei der Ausschaltbewegung eine Nase (31) des Stößels (24) mit einer Profilierung (29) des Schiebers (13) in Eingriff kommt.

## Claims

1. An electrical switch having a switching lever for actuating a slide which receives at least one contact bridge, and having an enabling slide which is active in the inserted position, **characterized in that** the enabling slide has a bearing point for the switching lever which is active in the inserted position, **in that** a push rod is guided linearly, is moved by the switching lever and comes into engagement with a profiled guide of the slide, and **in that** in the ON position, on pivoting into a latching step, the slide and the contact bridge perform a transverse movement on the fixed contacts of the contact springs.

2. A switch as claimed in claim 1, **characterized in that** pegs of the switching lever are guided in a heart-shaped profile track.

3. A switch as claimed in claim 1 or 2, **characterized in that** a chamber receiving the enabling slide is open in the plane of pivoting of the switching lever.

4. A switch as claimed in one of claims 1 to 3, **characterized in that** pins about which the slide is pivotal and lugs are provided for guidance of the slide and cooperate with guide walls and latching steps.

5. A switch as claimed in claim 4, **characterized in that** the profiled guide is constructed such that during the switching-on movement the push rod exerts a moment of rotation on the slide in the direction of latching of the lugs.

6. A switch as claimed in claim 4 or 5, **characterized in that** during the switching-off movement a lug of the push rod comes into engagement with a profiling of the slide.

## Revendications

1. Interrupteur électrique présentant un levier de commutation pour l'actionnement d'un coulisseau qui reçoit au moins un pont de contact et un coulisseau de libération actif dans la position enfoncée, **caractérisé en ce que** le coulisseau de libération (47) présente un emplacement de réception pour le levier de commutation (36) actif dans la position enfoncée, **en ce qu'**un poussoir (24) est guidé linéairement, est déplacé par le levier de commutation (36) et vient s'engager sur un guide profilé (17) du coulisseau (13) et **en ce que** dans la position MARCHE, lors du pivotement vers l'intérieur dans un épaulement d'encliquetage (9), le coulisseau (13) et le pont de contact (23) exécutent un déplacement transversal sur les contacts fixes des ressorts de contact (5).

2. Interrupteur selon la revendication 1, **caractérisé en ce que** des tourillons (37) du levier de commutation (36) sont guidés dans une piste profilée (35) en forme de coeur.

3. Interrupteur selon la revendication 1 ou 2, **caractérisé en ce qu'**une chambre (46) qui reçoit le coulisseau de libération (47) est ouverte dans le plan de pivotement du levier de commutation (36).

4. Interrupteur selon l'une des revendications 1 à 3, **caractérisé en ce que** pour le guidage du coulisseau (13), des boulons (14) autour desquels le coulisseau (13) peut pivoter et des becs (15) sont prévus, qui coopèrent avec des parois de guidage (6, 7) et des épaulements d'encliquetage (9).

5. Interrupteur selon la revendication 4, **caractérisé en ce que** le guide profilé (17) est configuré de telle sorte que le poussoir (24) exerce lors du mouvement de branchement un couple de rotation sur le coulisseau (13) dans le sens de l'encliquetage des becs (15).

6. Interrupteur selon la revendication 4 ou 5, **caractérisé en ce que** lors du mouvement de débranchement, un bec (31) du poussoir (24) vient s'engager dans un profilage (29) du coulisseau (13).
